# EUROPEAN PATENT APPLICATION

(11) **EP 4 734 341 A1**
(43) Date of publication of application: **29.04.2026**
(21) Application number: 24825643.0
(22) Date of filing: 22.05.2024
(51) Int. Cl.: H02K 19/12, H02K 1/26, H02K 3/487

(54) **ROTATING ELECTRICAL MACHINE**

(30) Priority: 20.06.2023 JP 2023101188
(71) Applicant: DENSO CORPORATION, Kariya-city, Aichi 448-8661 (JP)
(72) Inventor: SEGUCHI, Masahiro, Kariya-city, Aichi 448-8661 (JP); TSUCHIYA, Hiroyuki, Kariya-city, Aichi 448-8661 (JP)
(74) Representative: Kuhnen & Wacker Patent- und Rechtsanwaltsbüro PartG mbB
(86) International application number: PCT/JP2024/018859
(87) International publication number: WO 2024/262236

(57) **Abstract**

A rotating electric machine includes: a stator (50) having a stator coil (52); a rotor (60) having a rotor core (61) and main pole portions (62, 162, 262A, 262B) provided respectively for magnetic poles, which are aligned in a circumferential direction, and each protruding from the rotor core toward the stator in a radial direction; a field coil (70) wound on each of the main pole portions; and holding members (90) each of which is provided between a circumferentially-adjacent pair of the main pole portions, is mounted to the rotor, and covers the field coil from the stator side. Moreover, each of the holding members is formed by laminating, in an axial direction, plate-shaped members (91) formed of a metal material.

## Description

### [CROSS-REFERENCE TO RELATED APPLICATION]

The present application is based on Japanese Patent Application No. 2023-101188 filed on June 20, 2023, the contents of which are incorporated by reference into the present application.

### [TECHNICAL FIELD]

The present disclosure relates to wound-field rotating electric machines.

### [BACKGROUND ART]

There are known rotating electric machines which include a stator having a stator coil, a rotor and a field coil. The rotor has a rotor core, and main pole portions provided respectively for magnetic poles, which are aligned in a circumferential direction, and each protruding from the rotor core toward the stator in a radial direction. The field coil is wound on each of the main pole portions.

The rotating electric machines further include holding members. The holding members cover the field coil from the stator side and restrain radial movement of the field coil. Such a rotating electric machine is disclosed in, for example, Patent Document 1.

### [PRIOR ART LITERATURE]

### [PATENT LITERATURE]

[Patent Document 1]: Japanese Patent Application Publication No. JP 2010-045956 A

### [SUMMARY OF THE INVENTION]

With energization of the stator coil, magnetic flux is generated. Part of the generated magnetic flux becomes leakage magnetic flux crossing the holding members. If the holding members are formed of a metal material such as aluminum, eddy current loss will occur in the holding members due to the leakage magnetic flux crossing the holding members.

A primary object of the present disclosure is to provide a rotating electric machine which enables reduction in eddy current loss occurring in holding members.

According to the present disclosure, there is provided a rotating electric machine comprising:
a stator having a stator coil;
a rotor having a rotor core and main pole portions provided respectively for magnetic poles, which are aligned in a circumferential direction, and each protruding from the rotor core toward the stator in a radial direction;
a field coil wound on each of the main pole portions; and
holding members each of which is provided between a circumferentially-adjacent pair of the main pole portions, is mounted to the rotor, and covers the field coil from the stator side,
wherein
each of the holding members is formed by laminating, in an axial direction, plate-shaped members formed of a metal material.

With the laminated structure of the plate-shaped members of the holding members, it becomes possible to increase the electrical resistance between the plate-shaped members, thereby reducing eddy current loss occurring in the holding members.

### [BRIEF DESCRIPTION OF THE DRAWINGS]

The above-described object, other objects, features and beneficial advantages according to the present disclosure will become more apparent from the following detailed explanation with reference to the accompanying drawings. In the drawings:
FIG. 1 is an overall configuration diagram of a control system for a rotating electric machine according to a first embodiment;
FIG. 2 is a diagram illustrating an inverter and its peripheral configuration;
FIG. 3 is a transverse cross-sectional view of both a rotor and a stator;
FIG. 4 is a diagram illustrating an electric circuit formed in the rotor;
FIG. 5 is a transverse cross-sectional view of the rotor;
FIG. 6 is a perspective view of a holding member;
FIG. 7 is a perspective view illustrating an example of welding locations in the holding member;
FIG. 8 is a diagram showing calculation results of eddy current loss occurring in outer and inner plate parts;
FIG. 9 is a transverse cross-sectional view of a rotor according to a second embodiment;
FIG. 10 is a transverse cross-sectional view of a rotor according to a third embodiment;
FIG. 11 is a perspective view of a holding member according to the third embodiment;
FIG. 12 is a transverse cross-sectional view of a rotor according to a fourth embodiment;
FIG. 13 is another transverse cross-sectional view of the rotor according to the fourth embodiment;
FIG. 14 is a plan view of a main pole portion, which is developed in a circumferential direction, according to the fourth embodiment;
FIG. 15 is a plan view of a main pole portion, which is developed in a circumferential direction, according to a modification of the fourth embodiment;
FIG. 16 is a transverse cross-sectional view of a rotor according to a fifth embodiment;
FIG. 17 is a perspective view of a nonmagnetic member according to the fifth embodiment;
FIG. 18 is a perspective view illustrating the manner of fixing the nonmagnetic member to a main pole portion according to the fifth embodiment;
FIG. 19 is a plan view of a main pole portion, which is developed in a circumferential direction, according to a modification of the fifth embodiment;
FIG. 20 is a perspective view of a nonmagnetic member according to the modification of the fifth embodiment; and
FIG. 21 is a transverse cross-sectional view of a rotor according to a sixth embodiment.

### [EMBODIMENTS FOR CARRYING OUT THE INVENTION]

Embodiments will now be described with reference to the drawings. It should be noted that in the embodiments, functionally and/or structurally corresponding and/or associated parts will be designated by the same reference signs or by reference signs differing in the hundreds and higher digits as appropriate. Moreover, it also should be noted that for corresponding and/or associated parts in one embodiment, reference may be made to the explanation thereof in the other embodiments.

### [First Embodiment]

Hereinafter, a first embodiment embodying a rotating electric machine and a control device for the rotating electric machine according to the present disclosure will be described with reference to the drawings. The rotating electric machine and the control device together constitute a rotating electric machine control system; and the control system is installed in a vehicle. The rotating electric machine serves as a driving power source of the vehicle.

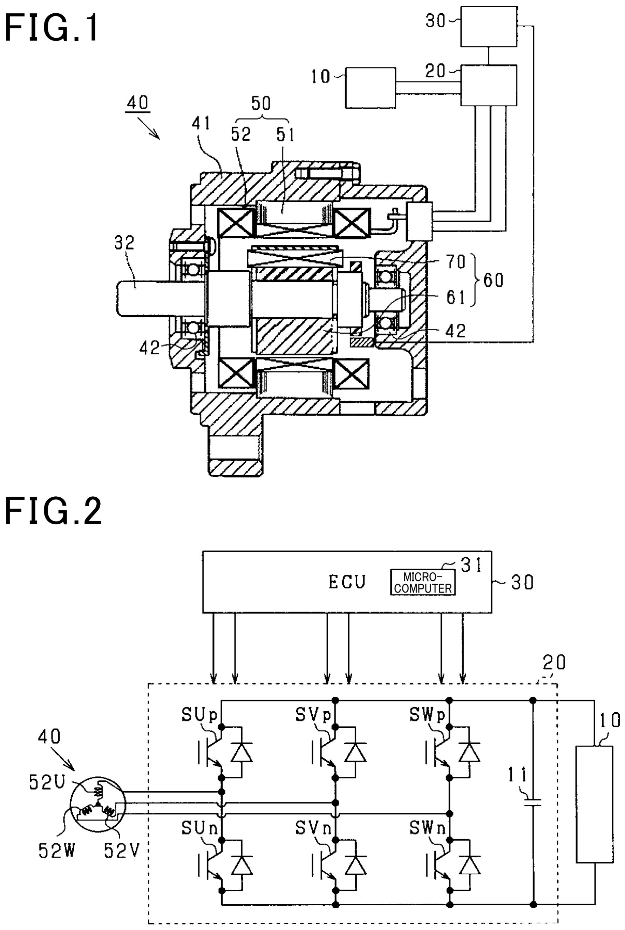

As shown in FIG. 1, the control system includes a DC power source 10, an inverter 20 and a control device 30, in addition to the rotating electric machine 40. The rotating electric machine 40 is configured as a wound-field synchronous rotating electric machine. In addition, the rotating electric machine 40, the inverter 20 and the control device 30 may be either integrated into a single electromechanical drive apparatus or configured as individual components.

The rotating electric machine 40 includes a housing 41, and a stator 50 and a rotor 60 both of which are accommodated in the housing 41. In the present embodiment, the rotating electric machine 40 is of an inner rotor type such that the rotor 60 is arranged radially inside the stator 50.

The stator 50 includes a stator core 51 and a stator coil 52 wound on the stator core 51. The stator coil 52 may be formed of, for example, copper wires. The stator coil 52 includes a U-phase winding 52U, a V-phase winding 52V and a W-phase winding 52W, which are arranged in such a manner as to be offset from each other by 120° in electrical angle.

The rotor 60 includes a rotor core 61 and a field coil 70. The field coil 70 may be formed by, for example, compression shaping to improve the space factor and the ease of assembly thereof. Moreover, the field coil 70 may be formed, for example, of aluminum wires. The specific gravity of aluminum wires is relatively low. Therefore, forming the field coil 70 with aluminum wires, it is possible to lower the centrifugal force that acts during rotation of the rotor 60. In addition, aluminum wires are lower in both strength and hardness than copper wires. Therefore, aluminum wires are suitable for being compression-shaped. It should be noted that the field coil 70 is not limited to aluminum wires, but may alternatively be formed of other materials, such as copper wires or CNTs (Carbon Nanotubes). It also should be noted that the field coil 70 is not necessarily formed by compression shaping.

The rotor core 61 has a center hole in which a rotating shaft 32 is inserted. The rotating shaft 32 is rotatably supported by the housing 41 via a pair of bearings 42.

As shown in FIG. 2, the inverter 20 includes: a U-phase series connection unit consisting of a U-phase upper-arm switch SUp and a U-phase lower-arm switch Sun that are connected in series with each other; a V-phase series connection unit consisting of a V-phase upper-arm switch SVp and a V-phase lower-arm switch SVn that are connected in series with each other; and a W-phase series connection unit consisting of a W-phase upper-arm switch SWp and a W-phase lower-arm switch SWn that are connected in series with each other. To a junction point between the U-phase upper-arm and lower-arm switches SUp and SUn, there is connected a first end of the U-phase winding 52U. To a junction point between the V-phase upper-arm and lower-arm switches SVp and SVn, there is connected a first end of the V-phase winding 52V. To a junction point between the W-phase upper-arm and lower-arm switches SWp and SWn, there is connected a first end of the W-phase winding 52W. On the other hand, a second end of the U-phase winding 52U, a second end of the V-phase winding 52V and a second end of the W-phase winding 52W are connected together at a neutral point. That is, in the present embodiment, the U-phase, V-phase and W-phase windings 52U, 52V and 52W of the stator coil 52 are star-connected. Moreover, in the present embodiment, each of the switches SUp, SVp, SWp, SUn, SVn and SWn is implemented by an IGBT. In addition, each of the switches SUp, SVp, SWp, SUn, SVn and SWn has a freewheeling diode connected in antiparallel thereto.

Each of the U-phase, V-phase and W-phase upper-arm switches SUp, SVp and SWp has its collector connected to a positive electrode terminal of the DC power source 10. Each of the U-phase, V-phase and W-phase lower-arm switches SUn, SVn and SWn has its emitter connected to a negative electrode terminal of the DC power source 10. In addition, a smoothing capacitor 11 is connected in parallel with the DC power source 10.

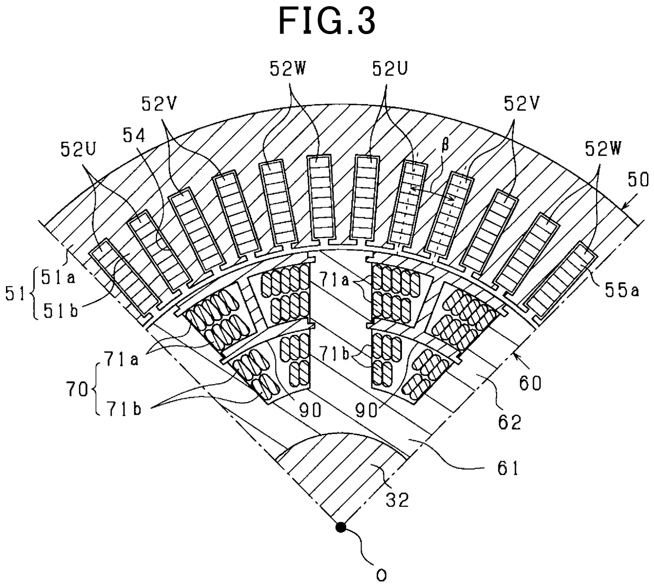

Next, the stator 50 and the rotor 60 will be described in detail with reference to FIG. 3.

In the rotating electric machine 40, both the stator 50 and the rotor 60 are arranged coaxially with the rotating shaft 32 (specifically, arranged on a central axis O of the rotating shaft 32). Hereinafter, the direction in which the central axis O of the rotating shaft 32 extends will be referred to as the axial direction; the directions of extending radially from the central axis O of the rotating shaft 32 will be referred to as radial directions; and the direction of extending along a circle whose center is on the central axis O of the rotating shaft 32 will be referred to as the circumferential direction.

The stator 50 is formed of a soft-magnetic material. For example, the stator 50 may be formed by laminating steel sheets in the axial direction. The stator 50 has an annular back yoke 51a and a plurality of teeth 51b each protruding radially inward from the back yoke 51a. Between circumferentially adjacent teeth 51b, there are formed a plurality of slots 54 in alignment with each other in the circumferential direction. The stator coil 52 is formed by having the U-phase, V-phase and W-phase windings 52U, 52V and 52W accommodated in a predetermined order in the slots 54. The stator 50 may have, for example, a segment coil structure in which a plurality of electrical conductor segments are employed. It should be noted that the structure of the stator coil 52 may be arbitrarily selected.

The rotor 60 is also formed of a soft-magnetic material. For example, the rotor 60 may be formed by laminating steel sheets in the axial direction. The rotor 60 has a cylindrical rotor core 61 and a plurality of main pole portions 62 protruding radially outward from the rotor core 61. More particularly, in the present embodiment, the rotor 60 has eight main pole portions 62 formed at equal intervals in the circumferential direction. Moreover, each of the main pole portions 62 extends in the axial direction.

The field coil 70 includes a first coil section 71a and a second coil section 71b. On each of the main pole portions 62, the first coil section 71a is wound on the radially outer side while the second coil section 71b is wound on the radially inner side. Moreover, on each of the main pole portions 62, the first and second coil sections 71a and 71b are wound in the same direction. Furthermore, for each circumferentially-adjacent pair of the main pole portions 62, the winding direction of the first and second coil sections 71a and 71b on one of the pair of the main pole portions 62 is opposite to the winding direction of the first and second coil sections 71a and 71b on the other of the pair of the main pole portions 62. Consequently, the magnetization directions of each circumferentially-adjacent pair of the main pole portions 62 become opposite to each other.

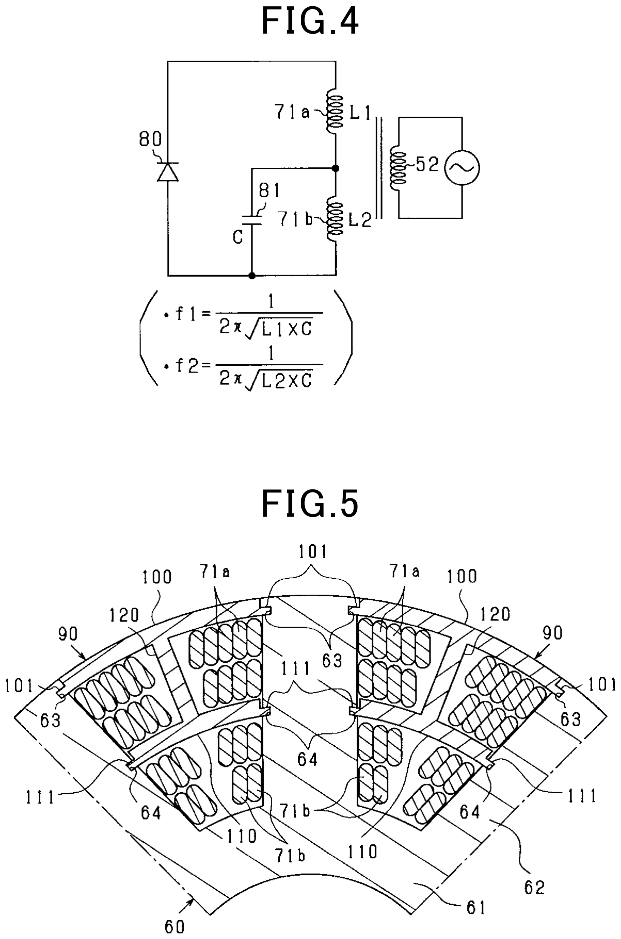

FIG. 4 shows an electric circuit which is formed in the rotor 60 and includes the first and second coil sections 71a and 71b wound on the main pole portions 62. The first coil section 71a and the second coil section 71b are connected in series with each other. In the rotor 60, there are provided a diode 80 as a rectifying element and a capacitor 81. The diode 80 is electrically connected in parallel with a series connection unit consisting of the first and second coil sections 71a and 71b. Specifically, a first end of the first coil section 71a is connected with the cathode of the diode 80; a second end of the first coil section 71a is connected with a first end of the second coil section 71b; and a second end of the second coil section 71b is connected with the anode of the diode 80. The capacitor 81 is electrically connected in parallel with the second coil section 71b. In addition, in FIG. 4, L1 represents the inductance of the first coil section 71a; L2 represents the inductance of the second coil section 71b; and C represents the capacitance of the capacitor 81.

In the present embodiment, a series resonant circuit is formed by the first coil section 71a, the capacitor 81 and the diode 80; and a parallel resonant circuit is formed by the second coil section 71b and the capacitor 81. In addition, in FIG. 4, f1 represents a first resonance frequency which is the resonance frequency of the series resonant circuit; and f2 represents a second resonance frequency which is the resonance frequency of the parallel resonant circuit.

It should be noted that: the anode of the diode 80 may alternatively be connected with the first end of the first coil section 71a; and the cathode of the diode 80 may alternatively be connected with the second end of the second coil section 71b.

Referring back to FIG. 2, the control device 30 is implemented by an ECU (Electronic Control Unit) which is mainly composed of a microcomputer 31. The microcomputer 31 includes a CPU (Central Processing Unit). The control device 30 generates drive signals for turning on/off the switches SUp, SVp, SWp, SUn, SVn and SWn of the inverter 20. Specifically, in order to convert DC power outputted from the DC power source 10 into AC power and supply the resultant AC power to the U-phase, V-phase and W-phase windings 52U, 52V and 52W, the control device 30 generates drive signals for turning on/off the switches SUp, SVp, SWp, SUn, SVn and SWn and outputs the generated drive signals to the gates of the switches SUp, SVp, SWp, SUn, SVn and SWn.

In the present embodiment, the control device 30 turns on/off the switches SUp, SVp, SWp, SUn, SVn and SWn so as to supply resultant current, which is the resultant of fundamental current and harmonic current, to each of the U-phase, V-phase and W-phase windings 52U, 52V and 52W. The fundamental current is electric current mainly for causing the rotating electric machine 40 to generate torque. On the other hand, the harmonic current is electric current mainly for exciting the field coil 70 and thereby inducing field current in the field coil 70. With the execution of switching control of the inverter 20 by the control device 30, the resultant current, which is obtained by superimposing the harmonic current on the fundamental current, flows through each of the U-phase, V-phase and W-phase windings 52U, 52V and 52W. In addition, U-phase, V-phase and W-phase currents, which are the resultant currents flowing respectively through the U-phase, V-phase and W-phase windings 52U, 52V and 52W, are offset in phase from each other by 120° in electrical angle.

Next, holding members 90, which are mounted to the rotor 60, will be described with reference to FIGS. 3, 5 and 6. The holding members 90 are members for restraining radial movement of the field coil 70 even when centrifugal force acts on the field coil 70 with rotation of the rotor 60. The holding members 90 are formed of a nonmagnetic metal material, such as aluminum or austenitic stainless steel (e.g., SUS). The reason for forming the holding members 90 with a nonmagnetic material is to prevent the holding members 90 from affecting a magnetic circuit that includes the rotor 60 and the stator 50.

Each of the holding members 90 includes an outer plate part 100 (corresponding to a "first plate part"), an inner plate part 110 (corresponding to a "second plate part"), and a connection part 120. The outer plate part 100 is located radially outside the first coil section 71a so as to bridge between a circumferentially-adjacent pair of the main pole portions 62. The outer plate part 100 has a plate shape extending in the axial direction as well as an arc shape extending in the circumferential direction so as to be convex radially outward. The first coil section 71a is covered by the outer plate part 100.

The inner plate part 110 is located between the first coil section 71a and the second coil section 71b in the radial direction so as to bridge between the circumferentially-adjacent pair of the main pole portions 62. The inner plate part 110 has a plate shape extending in the axial direction as well as an arc shape extending in the circumferential direction so as to be convex radially outward. The second coil section 71b is covered by the inner plate part 110. The circumferential length of the inner plate part 110 is less than the circumferential length of the outer plate part 100.

The connection part 120 is located between portions of the first coil section 71a which are wound respectively on the circumferentially-adjacent pair of the main pole portions 62, and extends in the radial direction. The connection part 120 connects a circumferentially central portion of the outer plate part 100 and a circumferentially central portion of the inner plate part 110.

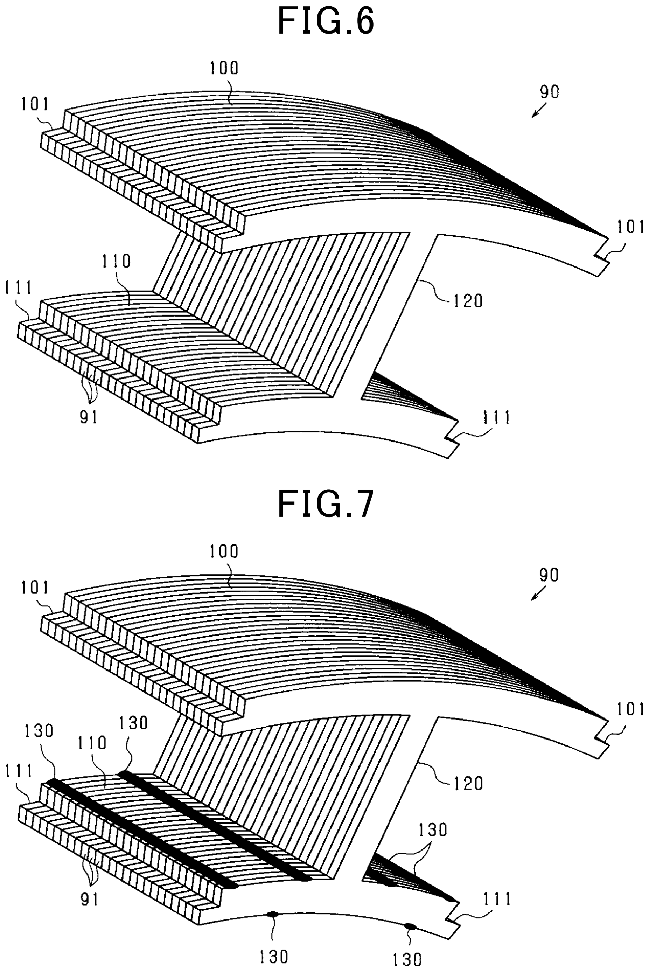

Next, a configuration for fixing the holding members 90 to the main pole portions 62 will be described. In each of the holding members 90, first protrusions 101, each of which extends in the circumferential direction, are formed respectively at radially inner portions of two circumferential ends of the outer plate part 100. As shown in FIG. 6, each of the first protrusions 101 extends from one end to the other end of the outer plate part 100 in the axial direction. Moreover, second protrusions 111, each of which extends in the circumferential direction, are formed respectively at radially inner portions of two circumferential ends of the inner plate part 110. As shown in FIG. 6, each of the second protrusions 111 extends from one end to the other end of the inner plate part 110 in the axial direction.

On the other hand, first recesses 63, each of which is recessed in the circumferential direction and extends in the axial direction, are formed respectively at two circumferential ends of a distal end portion of each of the main pole portions 62. Moreover, second recesses 64, each of which is recessed in the circumferential direction and extends in the axial direction, are formed respectively at two circumferential ends of a radially intermediate portion of each of the main pole portions 62. More specifically, the second recesses 64 are formed in that part of each of the main pole portions 62 which is located between the first coil section 71a and the second coil section 71b in the radial direction.

With movement of the holding members 90 relative to the rotor 60 in the axial direction, each of the first protrusions 101 of the outer plate parts 100 of the holding members 90 is fitted into a corresponding one of the first recesses 63 of the main pole portions 62 and each of the second protrusions 111 of the inner plate parts 110 of the holding members 90 is fitted into a corresponding one of the second recesses 64 of the main pole portions 62. Consequently, the holding members 90 are fixed to the corresponding main pole portions 62.

As shown in FIG. 6, each of the holding members 90 is formed by laminating a plurality of plate-shaped members 91, which are formed of a nonmagnetic metal material, in the axial direction. Insulating layers (e.g., insulating coats), which are electrically insulative, are formed respectively on surfaces of the plate-shaped members 91. The laminated structure of the plate-shaped members 91 is intended to reduce eddy current loss occurring in the holding members 90.

Specifically, with energization of the stator coil 52, magnetic flux is generated. Part of the generated magnetic flux becomes leakage magnetic flux crossing the holding members 90. As a result, eddy current loss occurs in the holding members 90. However, with the laminated structure of the plate-shaped members 91 of the holding members 90, it becomes possible to increase the interlayer electrical resistance in the holding members 90, thereby reducing eddy current loss occurring in the holding members 90.

Moreover, each of the holding members 90 is formed by fixing the plate-shaped members 91, by welding or staking, in at least one of the inner plate part 110 and the connection part 120 of the holding member 90 and thereby integrating the plate-shaped members 91 into one piece. That is, in the outer plate part 100 of each of the holding members 90, there is no location where the plate-shaped members 91 are fixed together by welding or staking. Consequently, it becomes possible to enhance the effect of reducing eddy current loss.

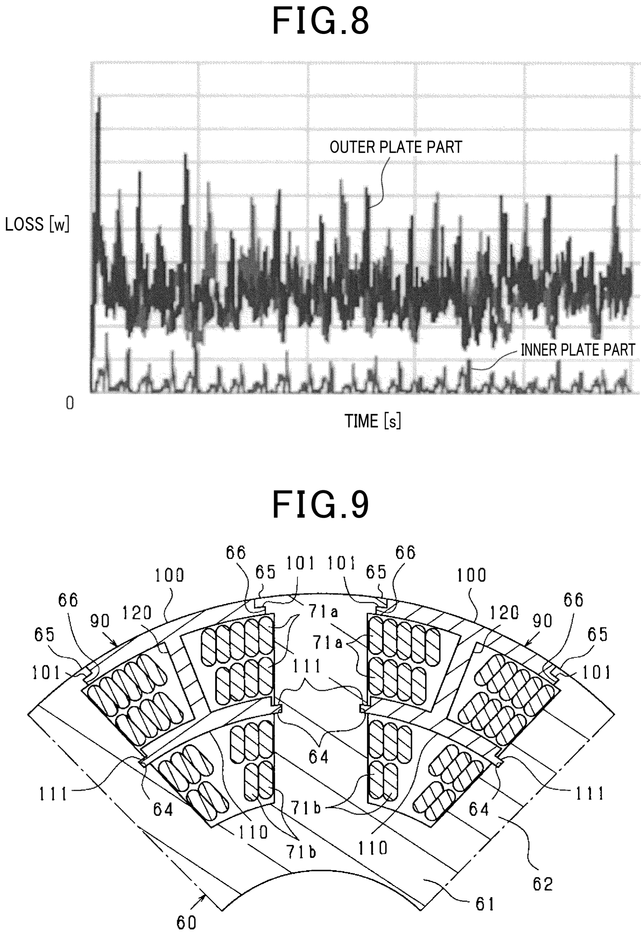

FIG. 8 shows calculation results of eddy current loss occurring in the outer plate part 100 and the inner plate part 110. As shown in FIG. 8, the eddy current loss occurring in the outer plate part 100 that is located relatively close to the stator coil 52 is significantly higher than the eddy current loss occurring in the inner plate part 110 that is located relatively far from the stator coil 52.

When the plate-shaped members 91 are integrated into one piece by welding or staking, the insulating layers formed on the surfaces of the plate-shaped members 91 may be peeled off, causing at least some of those portions of the plate-shaped members 91 which are fixed together by welding or staking to become electrically connected with each other. In this case, the effect of reducing eddy current loss would be lowered. In view of the above, the plate-shaped members 91 are fixed together by welding or staking in at least one of the inner plate part 110 and the connection part 120 where eddy current loss is relatively low, thereby enhancing the effect of reducing eddy current loss.

FIG. 7 illustrates an example in which the plate-shaped members 91 are fixed together by welding at a plurality of locations in the inner plate part 110. Each of the welds 130 where the plate-shaped members 91 are fixed together by welding extends from one end to the other end of the inner plate part 110 in the axial direction. More particularly, in the example shown in FIG. 7, the welds 130 are formed at portions of the inner plate part 110 which are near the connection part 120, at radially outer portions of two circumferential ends of the inner plate part 110, and at radially inner portions of the inner plate part 110.

Alternatively, the plate-shaped members 91 may be fixed together by welding or staking in both the inner plate part 110 and the connection part 120 or in only the connection part 120. Moreover, in the case of fixing the plate-shaped members 91 together by staking, those portions of the plate-shaped members 91 which are fixed together by staking may be compressed in the lamination direction of the plate-shaped members 91 to plastically deform them, thereby integrating the plate-shaped members 91 into one piece.

In the present embodiment, to supply field current to the field coil 70 without using brushes, harmonic current is superimposed on the electric current supplied to the stator coil 52. In this case, with energization of the stator coil 52, harmonic magnetic flux is further generated; and part of the generated harmonic magnetic flux becomes leakage magnetic flux crossing the holding members 90. Therefore, with the configuration of superimposing harmonic current on the electric current supplied to the stator coil 52, it is easy for the eddy current loss in the holding members 90 to increase. Accordingly, with the aforementioned configuration, a great benefit can be achieved by employing the holding members 90 having the laminated structure.

### [Modifications of First Embodiment]

For each of the holding members 90, the plate-shaped members 91 constituting the holding member 90 may be fixed together, by welding or staking, in the outer plate part 100 of the holding member 90, thereby being integrated into one piece. Even in this case, it is possible to achieve the effect of reducing eddy current loss.

The plate-shaped members 91 may be fixed together by using an adhesive instead of by welding or staking.

### [Second Embodiment]

Hereinafter, a second embodiment will be described with reference to the drawings, focusing on the differences thereof from the first embodiment. In the second embodiment, as shown in FIG. 9, for each of the main pole portions 62, collar portions 65 are formed in a distal end portion of the main pole portion 62 so as to extend respectively toward two opposite sides in the circumferential direction. Moreover, on radially inner sides of circumferential end portions of the collar portions 65, there are respectively formed recesses 66 that are recessed in the circumferential direction.

The holding members 90 are provided such that with movement of the holding members 90 relative to the rotor 60 in the axial direction, each of the first protrusions 101 of the outer plate parts 100 of the holding members 90 is brought into abutment with a corresponding one of the recesses 66 formed in the collar portions 65 of the main pole portions 62. Consequently, the circumferential end portions of the collar portions 65 of the main pole portions 62 respectively overlap the first protrusions 101 of the outer plate parts 100 of the holding members 90 in the radial direction. As a result, when centrifugal force, which is generated with rotation of the rotor 60, acts on the holding members 90, circumferential end portions of the outer plate parts 100 of the holding members 90 can be supported respectively by the circumferential end portions of the collar portions 65 of the main pole portions 62.

Moreover, it becomes possible to realize the structure of supporting the circumferential end portions of the outer plate parts 100 of the holding members 90 with the circumferential end portions of the collar portions 65 of the main pole portions 62, without increasing the radial dimensions of the collar portions 65 and the outer plate parts 100. Consequently, it becomes possible to increase the winding spaces of the field coil 70 which are surrounded by the circumferentially-adjacent main pole portions 62 and the outer plate parts 100 of the holding members 90.

### [Modification of Second Embodiment]

There may be no recesses 66 formed on the radially inner sides of the circumferential end portions of the collar portions 65 of the main pole portions 62. Moreover, in this case, there may be no first protrusions 101 formed at the circumferential ends of the outer plate parts 100 of the holding members 90.

### [Third Embodiment]

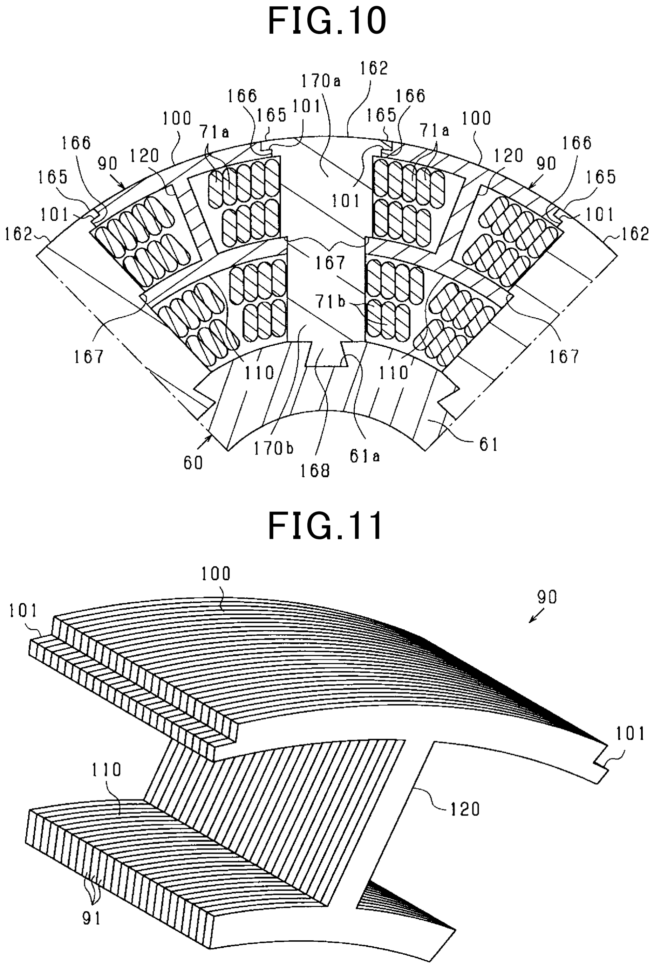

Hereinafter, a third embodiment will be described with reference to the drawings, focusing on the differences thereof from the second embodiment. In the third embodiment, as shown in FIG. 10, each of the main pole portions 162 has a radially outer portion formed as an increased-diameter portion 170a and a radially inner portion formed as a reduced-diameter portion 170b. The circumferential length of the reduced-diameter portion 170b is less than the circumferential length of the increased-diameter portion 170a. Consequently, it becomes possible to increase the installation space of the second coil section 71b. As a result, it becomes possible to increase the number of turns of the second coil section 71b and/or the cross-sectional area of the second coil section 71b.

Moreover, in a distal end portion of the increased-diameter portion 170a, there are formed collar portions 165 and recesses 166 as in the second embodiment.

Furthermore, step portions 167 are formed at a boundary between the increased-diameter portion 170a and the reduced-diameter portion 170b. As shown in FIG. 11, in the present embodiment, each of the holding members 90 has no second protrusions 111 formed in the inner plate part 110 thereof. Two circumferential end portions of the inner plate part 110 respectively abut the step portions 167 of a circumferentially-adjacent pair of the main pole portions 162. Consequently, the inner plate part 110 is supported by the step portions 167.

In the present embodiment, the main pole portions 162 are formed as core segments that are detachable from the rotor core 61. On a proximal end of the reduced-diameter portion 170b of each of the main pole portions 162, there is formed a protrusion 168 that protrudes in the radial direction. The protrusion 168 has a wedge shape such that the circumferential width thereof increases radially inward. On the other hand, in a radially outer portion of the rotor core 61, there are formed grooves 61a at predetermined intervals in the circumferential direction. The protrusions 168 of the main pole portions 162 are fitted respectively in the grooves 61a of the rotor core 61.

With movement of the main pole portions 162, on which the first coil section 71a and the second coil section 71 b are wound, relative to the rotor core 61 in the axial direction, the protrusions 168 of the main pole portions 162 are fitted respectively into the grooves 61a of the rotor core 61. Consequently, the main pole portions 162 are fixed to the rotor core 61. Thereafter, the holding members 90 are moved relative to the rotor 60 in the axial direction, thereby being fixed to the corresponding main pole portions 162.

### [Fourth Embodiment]

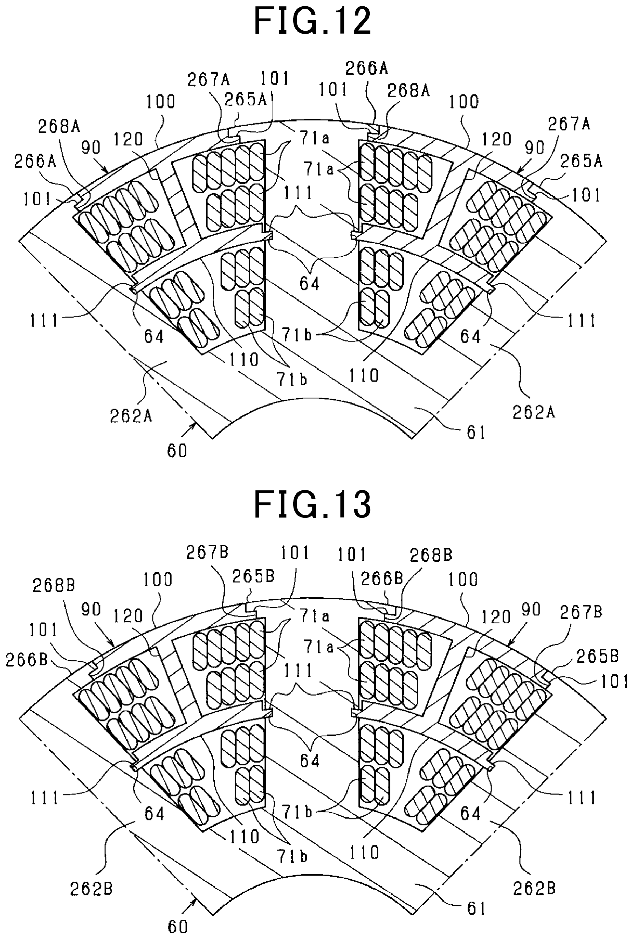

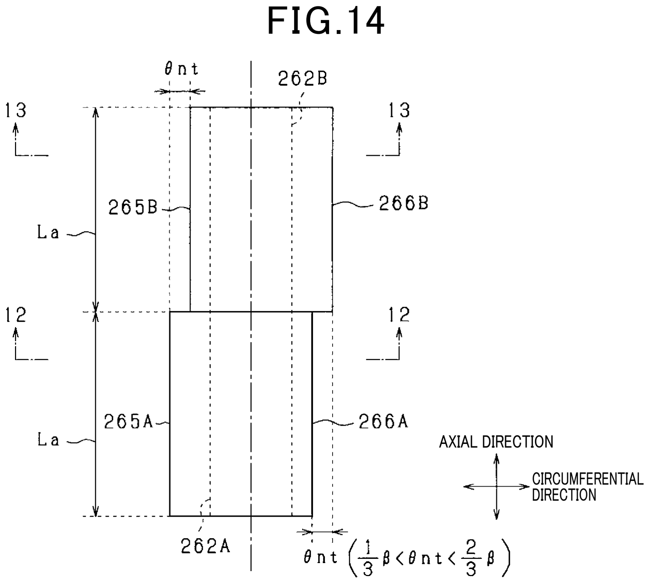

Hereinafter, a fourth embodiment will be described with reference to the drawings, focusing on the differences thereof from the second embodiment. In the fourth embodiment, to reduce torque ripple in the rotating electric machine 40, a skew structure is employed for the rotor 60 as shown in FIGS. 12 to 14. FIG. 14 is a plan view of a distal end portion of one of the main pole portions developed in the circumferential direction. FIG. 12 is a cross-sectional view of the rotor 60 taken along the line 12-12 in FIG. 14. FIG. 13 is a cross-sectional view of the rotor 60 taken along the line 13-13 in FIG. 14.

In the present embodiment, each of the main pole portions extending in the axial direction is composed of a first main pole portion 262A as shown in FIG. 12 and a second main pole portion 262B as shown in FIG. 13. The first main pole portion 262A extends from an axial center position of the main pole portion to one axial end of the main pole portion, whereas the second main pole portion 262B extends from the axial center position of the main pole portion to the other axial end of the main pole portion. It should be noted that the one-dot chain line in FIG. 14 indicates an imaginary plane extending in the radial direction through the central axis O of the rotating shaft 32 (see FIG. 3).

As shown in FIG. 12, in a distal end portion of the first main pole portion 262A, there are formed both a first long-side collar portion 265A extending toward a first side in the circumferential direction and a first short-side collar portion 266A extending toward a second side, which is opposite to the first side, in the circumferential direction. The circumferential length of the first long-side collar portion 265A is greater than the circumferential length of the first short-side collar portion 266A.

On the radially inner side of a circumferential end portion of the first long-side collar portion 265A, there is formed a first long-side recess 267A that is recessed in the circumferential direction. On the radially inner side of a circumferential end portion of the first short-side collar portion 266A, there is formed a first short-side recess 268A that is recessed in the circumferential direction. Two of the first protrusions 101 of the outer plate parts 100 of the holding members 90 respectively abut the first long-side recess 267A and the first short-side recess 268A, as in the second embodiment.

As shown in FIG. 13, in a distal end portion of the second main pole portion 262B, there are formed both a second short-side collar portion 265B extending toward the first side in the circumferential direction and a second long-side collar portion 266B extending toward the second side in the circumferential direction. The circumferential length of the second short-side collar portion 265B is less than the circumferential length of the second long-side collar portion 266B. Moreover, in the present embodiment, the circumferential length of the second short-side collar portion 265B is equal to the circumferential length of the first short-side collar portion 266A; and the circumferential length of the second long-side collar portion 266B is equal to the circumferential length of the first long-side collar portion 265A.

On the radially inner side of a circumferential end portion of the second short-side collar portion 265B, there is formed a second short-side recess 267B that is recessed in the circumferential direction. On the radially inner side of a circumferential end portion of the second long-side collar portion 266B, there is formed a second long-side recess 268B that is recessed in the circumferential direction. Two of the first protrusions 101 of the outer plate parts 100 of the holding members 90 respectively abut the second short-side recess 267B and the second long-side recess 268B, as in the second embodiment. In addition, in the present embodiment, the holding members 90 fixed to the second main pole portion 262B are separate members from the holding members 90 fixed to the first main pole portion 262A.

As shown in FIG. 14, let θnt be the amount of circumferential offset between a circumferential end of the first long-side collar portion 265A of the first main pole portion 262A and a circumferential end of the second short-side collar portion 265B of the second main pole portion 262B. The amount of circumferential offset between a circumferential end of the first short-side collar portion 266A of the first main pole portion 262A and a circumferential end of the second long-side collar portion 266B of the second main pole portion 262B is also θnt. Moreover, the following relationship is satisfied: 1/3 × β < θnt < 2/3 × β, where β is one slot-pitch of the stator 50 (see FIG. 3). Consequently, it becomes possible to reduce torque ripple in the rotating electric machine 40. More particularly, in the present embodiment, θnt = β/2. Consequently, it becomes possible to enhance the effect of reducing torque ripple.

Furthermore, in the present embodiment, the axial length La of the first main pole portion 262A and the axial length La of the second main pole portion 262B are set to be equal to each other. Consequently, it becomes possible to further enhance the effect of reducing torque ripple.

### [Modification of Fourth Embodiment]

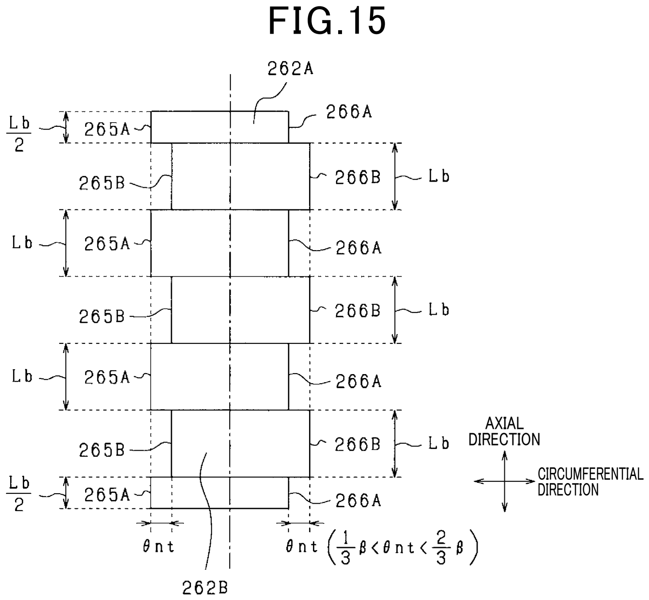

As shown in FIG. 15, each of the main pole portions may be composed of first main pole portions 262A and second main pole portions 262B that are arranged alternately in the axial direction. In this case, the total axial length (= Lb/2 + Lb + Lb + Lb/2) of the first main pole portions 262A (i.e., of the first long-side collar portions 265A or of the first short-side collar portions 266A) and the total axial length (= Lb + Lb + Lb) of the second main pole portions 262B (i.e., of the second short-side collar portions 265B or of the second long-side collar portions 266B) are set to be equal to each other. In the example shown in FIG. 15, the first main pole portions 262A and the second main pole portions 262B are arranged such that the main pole portion composed of the first and second main pole portions 262A and 262B is line-symmetrical with respect to the center of the main pole portion in the axial direction. Consequently, it becomes possible to further enhance the effect of reducing torque ripple.

### [Fifth Embodiment]

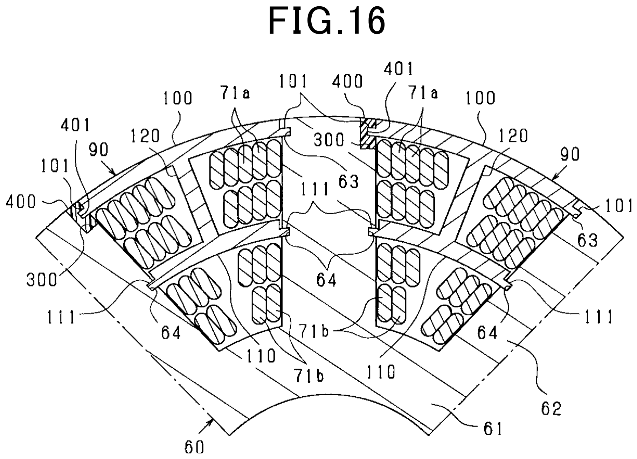

Hereinafter, a fifth embodiment will be described with reference to the drawings, focusing on the differences thereof from the first embodiment. In the fifth embodiment, as shown in FIG. 16, for each of the main pole portions 62, a cutout 300, which extends in the axial direction, is formed in one circumferential end portion of a distal end portion of the main pole portion 62. The cutout 300 is open in both the radial and circumferential directions. Moreover, the following relationship is satisfied: 1/3 × β < θnt < 2/3 × β, where β is one slot-pitch of the stator 50 (see FIG. 3), and θnt is the circumferential width of the cutout 300. More particularly, in the present embodiment, θnt = β/2. Consequently, it becomes possible to reduce torque ripple in the rotating electric machine 40.

With the cutout 300 formed in the distal end portion of the main pole portion 62, there is no longer a support portion in the main pole portion 62 which supports a circumferential end portion of the outer plate part 100 of a corresponding one of the holding members 90. Therefore, in the present embodiment, as shown in FIGS. 16 to 18, a nonmagnetic member 400 (corresponding to a "nonmagnetic part"), which is formed of nonmagnetic synthetic resin, is provided to fill the cutout 300 formed in the distal end portion of the main pole portion 62. The nonmagnetic member 400 extends in the axial direction. Moreover, the nonmagnetic member 400 has the same circumferential width θnt as the cutout 300. With the nonmagnetic member 400, which fills the cutout 300, formed of a nonmagnetic material, it becomes possible to achieve the effect of reducing torque ripple in the rotating electric machine 40.

In the nonmagnetic member 400, there is formed a nonmagnetic recess 401 that is recessed in the circumferential direction. A first protrusion 101 of the outer plate part 100 of the corresponding holding member 90 is fitted in the nonmagnetic recess 401. Consequently, it becomes possible to support both the circumferential end portions of the outer plate part 100.

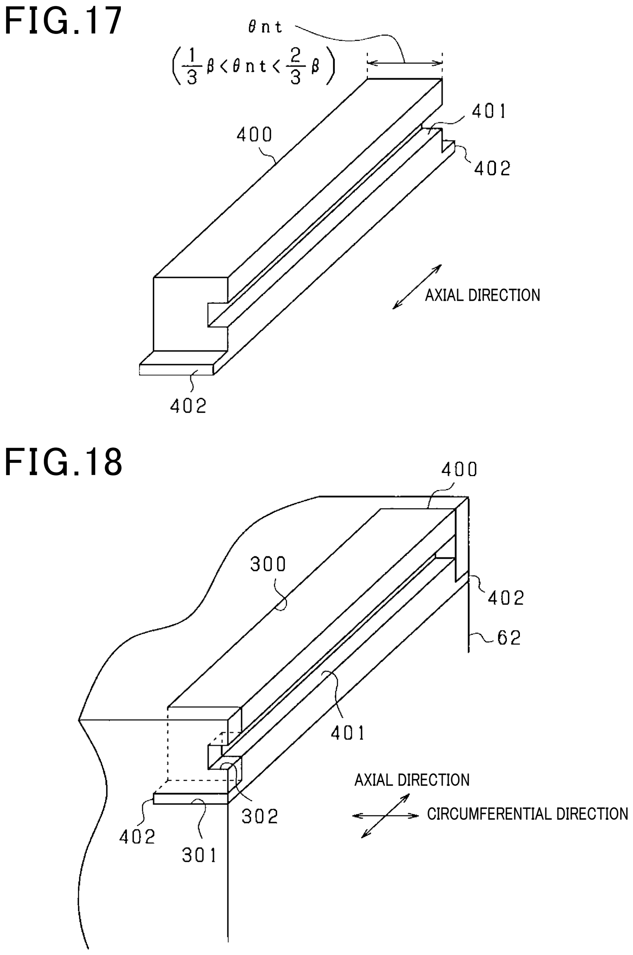

Next, a method of fixing the nonmagnetic member 400 to the main pole portion 62 will be described with reference to FIGS. 17 and 18.

At both axial ends of the nonmagnetic member 400, there are formed protrusions 402 each extending in the axial direction. On the other hand, at both axial ends of the distal end portion of the main pole portion 62, there are formed grooves 301 that are recessed in the circumferential direction. With movement of the nonmagnetic member 400 relative to the main pole portion 62 in the circumferential direction, the protrusions 402 of the nonmagnetic member 400 are fitted respectively into the grooves 301 of the main pole portion 62. Consequently, the nonmagnetic member 400 is fixed to the main pole portion 62.

Moreover, in the distal end portion of the main pole portion 62, there is also formed a guide recess 302, which is recessed in the circumferential direction, on the radially outer side of one of the grooves 301 of the main pole portion 62. In the state of the nonmagnetic member 400 having been fixed in the cutout 300, the nonmagnetic recess 401 of the nonmagnetic member 400 and the guide recess 302 of the main pole portion 62 communicate with each other in the axial direction. Consequently, in the state of the nonmagnetic member 400 having been fixed in the cutout 300, the circumferential end portion of the outer plate part 100 of the corresponding holding member 90 can be moved in the axial direction, thereby being fitted into the nonmagnetic recess 401 of the nonmagnetic member 400 via the guide recess 302 of the main pole portion 62.

### [Modifications of Fifth Embodiment]

The nonmagnetic member 400 may alternatively be formed of any nonmagnetic material other than synthetic resin.

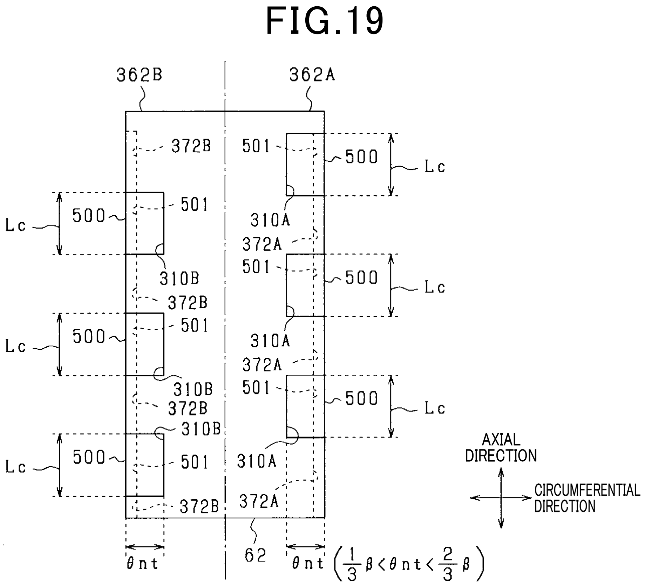

As shown in FIG. 19, cutouts may be formed in both circumferential end portions of a distal end portion of each of the main pole portions 62. FIG. 19 is a plan view of a distal end portion of one of the main pole portions 62 developed in the circumferential direction.

Hereinafter, for each of the main pole portions 62, one of the two circumferential end portions of the main pole portion 62 will be referred to as the first main-pole end portion 362A; and the other of the two circumferential end portions of the main pole portion 62 will be referred to as the second main-pole end portion 362B. In parts of the first main-pole end portion 362A, there are respectively formed first cutouts 310A each extending in the axial direction; and in parts of the second main-pole end portion 362B, there are respectively formed second cutouts 310B each extending in the axial direction.

Specifically, a plurality (e.g., three) of first cutouts 310A are formed in the first main-pole end portion 362A and spaced apart from one another in the axial direction. Similarly, a plurality (e.g., three) of second cutouts 310B are formed in the second main-pole end portion 362B and spaced apart from one another in the axial direction. Moreover, the axial positions of the first cutouts 310A do not overlap the axial positions of the second cutouts 310B. Furthermore, the first cutouts 310A and the second cutouts 310B have the same circumferential width θnt. The circumferential width θnt is set to satisfy (1/3 × β < θnt < 2/3 × β), and more particularly to satisfy (θnt = β/2).

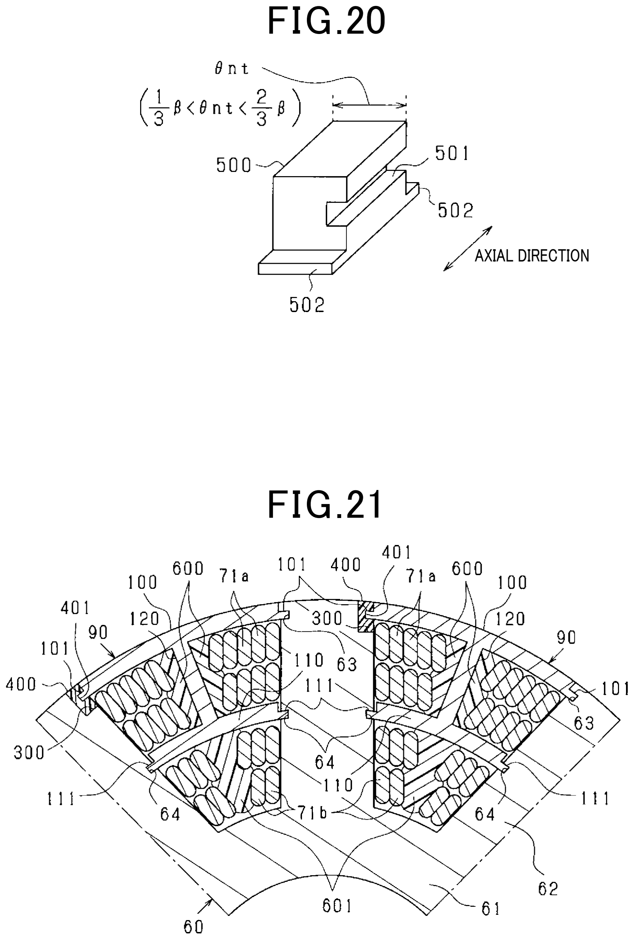

FIG. 20 shows one of nonmagnetic members 500 according to the present modification. Each of the nonmagnetic members 500 has formed therein a nonmagnetic recess 501 and protrusions 502, similar to the nonmagnetic member 400 shown in FIG. 17. Moreover, in each of the cutouts 310A and 310B, there is fixed a corresponding one of the nonmagnetic members 500. Furthermore, in the first and second main-pole end portions 362A and 362B, there are respectively formed first and second guide recesses 372A and 372B for fitting circumferential end portions of the outer plate parts 100 of the holding members 90 into the nonmagnetic recesses 501 of the nonmagnetic members 500, similar to the configuration in FIG. 18.

In the example shown in FIG. 19, the total axial length (= Lc + Lc + Lc) of those parts of the first main-pole end portion 362A where the first cutouts 310A are respectively formed (or the nonmagnetic members 500 are respectively provided) is equal to the total axial length (= Lc + Lc + Lc) of those parts of the second main-pole end portion 362B where the second cutouts 310B are respectively formed (or the nonmagnetic members 500 are respectively provided). Consequently, it becomes possible to enhance the effect of reducing torque ripple.

### [Sixth Embodiment]

Hereinafter, a sixth embodiment will be described with reference to the drawings, focusing on the differences thereof from the fifth embodiment. In the sixth embodiment, as shown in FIG. 21, first insulating members 600 are provided between the first coil section 71a and the connection parts 120 of the holding members 90. Moreover, second insulating members 601 are provided between portions of the second coil section 71b which are wound respectively on circumferentially-adjacent main pole portions 62. The first insulating members 600 and the second insulating members 601 are formed of a nonmagnetic material that is electrically insulative, such as synthetic resin. The first insulating members 600 have a wedge shape and function as wedges between the first coil section 71a and the connection parts 120 of the holding members 90. The second insulating members 601 also have a wedge shape and function as wedges between the portions of the second coil section 71b which are wound respectively on circumferentially-adjacent main pole portions 62.

According to the present embodiment described above, it becomes possible to firmly fix the field coil 70 in the rotor 60, thereby enhancing the resistance of the rotating electric machine 40 to the centrifugal force and vibration.

### [Other Embodiments]

The above-described embodiments may be modified and implemented as follows.

The configuration of the rotor 60 according to the sixth embodiment may be applied to the first to fourth embodiments.

The capacitor 81 for forming the resonant circuits may be electrically connected in parallel with the first coil section 71a instead of the second coil section 71b.

Each of the holding members 90 may have no connection part 120 formed therein. In this case, each of the holding members 90 may be composed of two members, i.e., an outer plate member corresponding to the outer plate part 100 and an inner plate member corresponding to the inner plate part 110. Moreover, each of the holding members 90 may have neither the connection part 120 nor the inner plate part 110. In this case, each of the holding members 90 may be implemented by an outer plate member corresponding to the outer plate part 100.

The rotating electric machine 40 is not limited to an inner rotor type rotating electric machine, but may alternatively be an outer rotor type rotating electric machine. In this case, the main pole portions 62 protrude radially inward from the rotor core 61. Moreover, in an outer rotor type rotating electric machine, to prevent the field coil 70 from being exposed between circumferentially-adjacent main pole portions 62, there may be provided holding members that cover the field coil 70 from the radially inner side.

The rotating electric machine 40 is not limited to a star-connected rotating electric machine, but may alternatively be a delta-connected rotating electric machine.

The stator core 51 may alternatively be a toothless core having no teeth formed therein.

The configuration for causing field current to flow in the field coil 70 is not limited to the electric circuit shown in FIG. 4. Alternatively, a configuration may be employed which includes brushes electrically connected to the field coil 70 and an electric power source electrically connected to the brushes. In this case, it is unnecessary to apply harmonic current for inducing field current in the field coil 70 to the stator coil 52.

The rotating electric machine 40 is not limited to a rotating electric machine used as an in-vehicle main machine, but may alternatively be, for example, an ISG (Integrated Starter Generator) that serves both as an electric motor and as an electric generator.

The mobile object in which the rotating electric machine control system is installed is not limited to a vehicle, but may alternatively be, for example, an aircraft or a ship. Moreover, the rotating electric machine control system is not limited to a system installed in a mobile object, but may alternatively be a stationary system.

While the present disclosure has been described pursuant to the above embodiments, it should be appreciated that the present disclosure is not limited to the embodiments and the structures. Instead, the present disclosure encompasses various modifications and changes within equivalent ranges. In addition, various combinations and modes are also included in the category and the scope of technical idea of the present disclosure.

## Claims

1. A rotating electric machine comprising:
a stator (50) having a stator coil (52);
a rotor (60) having a rotor core (61) and main pole portions (62, 162, 262A, 262B) provided respectively for magnetic poles, which are aligned in a circumferential direction, and each protruding from the rotor core toward the stator in a radial direction;
a field coil (70) wound on each of the main pole portions; and
holding members (90) each of which is provided between a circumferentially-adjacent pair of the main pole portions, is mounted to the rotor, and covers the field coil from the stator side,
wherein
each of the holding members is formed by laminating, in an axial direction, plate-shaped members (91) formed of a metal material.

2. The rotating electric machine as set forth in Claim 1, wherein:
the field coil has a first coil section (71a) and a second coil section (71b) that are electrically connected in series with each other;
the first coil section is located closer than the second coil section to the stator in the radial direction;
each of the holding members has
a first plate part (100) located closer than the first coil section to the stator in the radial direction and covering the first coil section from the stator side,
a second plate part (110) located between the first coil section and the second coil section in the radial direction and covering the second coil section from the stator side, and
a connection part (120) located between portions of the first coil section which are wound respectively on the circumferentially-adjacent pair of the main pole portions and extending in the radial direction to connect the first plate part and the second plate part; and
for each of the holding members, the plate-shaped members forming the holding member are fixed, by welding or staking, in at least one of the second plate part and the connection part of the holding member and thereby integrated into one piece.

3. The rotating electric machine as set forth in Claim 2, wherein:
the stator further has a back yoke (51a) and a plurality of teeth (51b) arranged in the circumferential direction and each protruding from the back yoke toward the rotor in the radial direction;
for each of the main pole portions, a cutout (300, 310A, 310B), which extends in the axial direction, is formed in at least one of two circumferential end portions of a distal end portion of the main pole portion;
1/3 × β < θnt < 2/3 × β, where β is one slot-pitch of the stator and θnt is the circumferential width of the cutout;
in the cutout, there is provided a nonmagnetic part (400, 500) formed of a nonmagnetic material;
in the circumferential end portions of the distal end portion of the main pole portion and the nonmagnetic part, there are formed recesses (401, 501) each of which is recessed in the circumferential direction and has a circumferential end portion of the first plate part of a corresponding one of the holding members fitted therein.

4. The rotating electric machine as set forth in Claim 3, wherein θnt = β/2.

5. The rotating electric machine as set forth in Claim 2, wherein:
for each of the main pole portions, collar portions (65) are formed in a distal end portion of the main pole portion so as to extend respectively toward two opposite sides in the circumferential direction;
on the rotor core side of circumferential end portions of the collar portions in the radial direction, there are respectively formed recesses (66) that are recessed in the circumferential direction;
in each of the holding members, protrusions (101), each of which extends in the circumferential direction, are formed respectively at portions of two circumferential ends of the first plate part which are on the rotor core side in the radial direction; and
the holding members are provided such that (i) each of the protrusions of the holding members abuts a corresponding one of the recesses formed in the collar portions of the main pole portions, and (ii) each of the circumferential end portions of the collar portions of the main pole portions overlaps a corresponding one of the protrusions of the holding members in the radial direction.

6. The rotating electric machine as set forth in Claim 2, wherein:
each of the main pole portions includes a first main pole portion (262A) and a second main pole portion (262B);
in a distal end portion of the first main pole portion, there are formed both a first long-side collar portion (265A) extending toward a first side in the circumferential direction and a first short-side collar portion (266A) extending toward a second side, which is opposite to the first side, in the circumferential direction;
the circumferential length of the first long-side collar portion is greater than the circumferential length of the first short-side collar portion;
in a distal end portion of the second main pole portion, there are formed both a second short-side collar portion (265B) extending toward the first side in the circumferential direction and a second long-side collar portion (266B) extending toward the second side in the circumferential direction;
the circumferential length of the second short-side collar portion is less than the circumferential length of the second long-side collar portion; and
1/3 × β < θnt < 2/3 × β, where θnt is each of the amount of circumferential offset between a circumferential end of the first long-side collar portion and a circumferential end of the second short-side collar portion and the amount of circumferential offset between a circumferential end of the first short-side collar portion and a circumferential end of the second long-side collar portion, and β is one slot-pitch of the stator.

7. The rotating electric machine as set forth in Claim 6, wherein θnt = β/2.

8. The rotating electric machine as set forth in Claim 2, wherein:
each of the main pole portions has an increased-diameter portion (170a) formed on the stator side in the radial direction and a reduced-diameter portion (170b) formed on the rotor core side in the radial direction;
the circumferential length of the reduced-diameter portion is less than the circumferential length of the increased-diameter portion;
step portions (167) are formed between the increased-diameter portion and the reduced-diameter portion; and
two circumferential end portions of the second plate part of each of the holding members are supported respectively by the step portions of a circumferentially-adjacent pair of the main pole portions.

9. The rotating electric machine as set forth in any one of Claims 2 to 8, wherein:
the rotor further has a diode (80) electrically connected in parallel with a series connection unit consisting of the first coil section and the second coil section, and a capacitor (81) electrically connected in parallel with either the first coil section or the second coil section; and
the rotating electric machine is configured to have harmonic current flowing through the stator coil for inducing field current in the field coil.
